(19)

**Europäisches Patentamt**
**European Patent Office**
**Office européen des brevets**

(11) **EP 4 559 326 A1**

(12) **EUROPEAN PATENT APPLICATION**

(43) Date of publication:
28.05.2025 Bulletin 2025/22

(21) Application number: 23020518.9

(22) Date of filing: 23.11.2023

(51) International Patent Classification (IPC):
*A23L 33/105* (2016.01)    *A23L 33/21* (2016.01)
*A23L 33/00* (2016.01)

(52) Cooperative Patent Classification (CPC):
**A23L 33/105; A23L 33/21; A23L 33/40**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Rudjer Boskovic Institute**
**10000 Zagreb (HR)**

(72) Inventors:
• **Lenkica, Penava**
**48000 Koprivnica (HR)**

• **Ceilinger, Marijana**
**48000 Koprivnica (HR)**
• **Kralj, Marijeta**
**10000 Zagreb (HR)**
• **Jeric, Ivanka**
**10000 Zagreb (HR)**
• **Balog, Tihomir**
**10000 Zagreb (HR)**
• **Vitali Cepo, Dubravka**
**10000 Zagreb (HR)**

(74) Representative: **Pejcinovic, Tomislav**
**CPZ - Centar za patente d.o.o.**
**Kutinska 2**
**10000 Zagreb (HR)**

(54) **NUTRITIONAL COMPOSITION COMPRISING CURCUMIN**

(57)    The present invention discloses an enteral composition comprising curcumin and dietary fibers selected from resistant dextrin, oligofructose, inulin, Acacia fiber and Citrus fiber. The composition is useful for the nutrition of people suffering from diabetes, GI disorders, general or disease-related malnutrition or are at risk of malnutrition, for people suffering from sarcopenia and age related nutritional consequences.

Figure 2

**Description**

**FIELD OF THE INVENTION**

The present invention relates to an enteral composition comprising curcumin with improved bioaccessibility. More particularly, it relates to enteral composition comprising curcumin and dietary fibers.

**BACKGROUND OF THE INVENTION**

The term "dietary fiber" was coined in 1953, but years before that, some properties, such as a laxative efect, increased stool weight and disease prevention were attributed to dietary fibre. Nowadays, the link between dietary fibers and the prevention of cardiovascular and metabolic diseases, such as diabetes, obesity and cancer, is well known (Slavin, J., Fiber and prebiotics: Mechanisms and health benefits. Nutrients 2013, 5, 1417-1435).

The main physical properties of dietary fiber include water solubility, fermentability, water-holding capacity and viscosity. Physiological and health effects of dietary fiber are dependent upon, not only their primary chemical structure, but also on their physical properties (R. Meier et al., 5.7. Dietary Fiber: definition and classification, 281-288, In Sobotka et al. Basic in Clinical Nutrition, 4th.Ed. Galen; 2011).

Curcumin [1,7-bis(4-hydroxy-3-methoxyphenyl)-1,6-heptadiene-3,5-dione] is a yellowish pigment and a well-known polyphenol found in the rhizome of turmeric and other Curcuma spp. Curcumin is usually present in the plant of the Zingiberaceae family with the related compounds demethoxycurcumin, bis-demethoxycurcumin, and cyclo-curcumin Together, these four compounds are referred to as curcuminoids (Priyadarsini, K.I.: The chemistry of curcumin: From extraction to therapeutic agent. Molecules 2014, 19, 20091-20112). Noticeable, for curcuminoid content in the roots, are the species *Curcuma zedoaria* (>100 $\mu$g/g), *Curcuma longa* (1-2 $\mu$g/g) and *Curcuma aromatica* (0.1 $\mu$g/g) (Esatbeyoglu et al.: Curcumin-from molecule to biological function. Angew. Chem. Int. Ed. 2012, 51, 5308-5332. ). Tetrahydrocurcuminoids are derivatives of curcuminoids.

Curcumin has a well-established anti-inflammatory role by regulating numerous transcription factors and cytokines linked to inflammation. Inflammation is an underlying pathology in cardiovascular diseases, rendering curcumin a potential therapeutic compound (Banez et al.: A systemic review on the antioxidant and anti-inflammatory effects of resveratrol, curcumin, and dietary nitric oxide supplementation on human cardiovascular health. Nutr. Res. 2020;78:11-26.)

Curcumin has strong anti-inflammatory and antineoplastic properties used alone or as add-on therapy with standard therapy (G.R.B. Irving et al.: Curcumin: The potential for efficacy in gastrointestinal diseases. Best Practice & Research Clinical Gastroenterology 25 (2011) 519-534.

The phytochemical compound curcumin was reported to be effective in maintaining remission in patients with ulcerative colitis (UC). In research with 50 patients with active disease, addition of a 3 g/day of curcumin gave better results than placebo and 5-aminosilicates in induction of clinical remission, in patients with active mild-to-moderate UC (Lang et al.:. Curcumin in Combination With Mesalamine Induces Remission in Patients With Mild-to-Moderate Ulcerative Colitis in a Randomized Controlled Trial. Clin Gastroenterol Hepatol 2015;13(8):1444-1449.e1.)

In research with 1 g of curcumin /2 times a day curcumin was found to be a promising and safe for maintaining remission in patients with quiescent UC (Hanai et al.: Curcumin maintenance therapy for ulcerative colitis: randomized, multicenter, double-blind, placebocontrolled trial. Clin Gastroenterol Hepatol 2006;4(12):1502-6)

However, its therapeutic potential is limited mainly due to relatively poor bioavailability in humans, even when administered at high dosage (12 g/day) Low bioavailability is caused by low absorption rates, rapid liver metabolism but also by low bioaccessibility, i.e. low amounts of compound available for absorption after oral ingestion. (Anand et al.:. Bioavailability of curcumin: Problems and Promises. Mol. Pharm. 2007, 4, 807-818..

Low bioaccessibility is mainly caused by its instability at the physiological pH and easy degradation in the intestinal tract. (Teixé-Roig et al.: Enhancing the Gastrointestinal Stability of Curcumin by Using Sodium Alginate-Based Nanoemulsions Containing Natural Emulsifiers. Int J Mol Sci. 2022 Dec 28; 24(1):498.; Wang et al.: et al.: Stability of Curcumin in Buffer Solutions and Characterization of Its Degradation Products. J. Pharm. Biomed. Anal. 1997;15:1867-1876. doi: 10.1016/S0731-7085(96)02024-9.)

The problem of poor bioaccessibility in humans limits its potential to be used as food ingredient (as in this case food for special medical purposes) or dietary supplement and its oral administration. To improve bioaccessibility of curcumin different formulation strategies are being investigated (different combination of ingredients, nano or microparticles, micelles, suspensions etc.)

Bioacessibility of polyphenols such as curcumin is significantly affected by the food matrix particularly by the presence of dietary fiber. Dietary fibers create associations with polyphenols usually through non-covalent interactions (hydrogen bonds, van der Waals forces and hydrophobic interactions) and their formation depends on specific physico-chemical characteristics of dietary fiber and particular polyphenols and environmental conditions (temperature, pH and ionic strength).

Formation of such complexes can negatively affect bioaccessibility of a particular polyphenols because polyphenols, otherwise soluble, adsorb to the surface of the dietary fiber and cannot be absorbed in the small intestine. As the part of dietary fiber complex they are delivered to colon where they can exert particular biological effects or are excreted from the organism via stool. Formation of insoluble complexes with different types of polyphenols has been proven for cellulose-like fiber, glucans, pectins, hemicellulose, dextrins and resistant starch (Jakobek, L., Matić, P.: Non-covalent dietary fiber - Polyphenol interactions and their influence on polyphenol bioaccessibility, *Trends in Food Science & Technology,* 83, **2019,** 235-247.; Liu et al.: Adsorption mechanism of polyphenols onto starch nanoparticles and enhanced antioxidant activity under adverse conditions. Journal of Functional Foods 2016, 26, 632-644; Liu, D. et al.: Adsorption behavior of polyphenols on cellulose is affected by processing history. Food Hydrocolloids, 2017, 63, 496-507.)

On the other hand, formation of complexes with other types of dietary fiber can increase the gastrointestinal stability and bioaccessibility of certain instable or liposoluble polyphenols in the small intestine. For example, it has been shown that bioaccessibility of curcumin can be enhanced by the formation of micelles with oat-beta glucans because they increase its gastrointestinal stability and improve its solubility by formation of water-soluble micelles (Liu, J. et al.: Optimization and characterization of curcumin loaded in octenylsuccinate oat $\beta$-glucan micelles with an emphasis on degree of substitution and molecular weight. Journal of Agricultural and Food Chemistry, 2014, 62, 7532-7540.; Liu, J. et al, Aggregates of octenylsuccinate oat $\beta$-glucan as novel capsules to stabilize curcumin over food processing, storage and digestive fluids and to enhance its bioavailability. Food and Function, 2018, 9, 491-501.)

The exact structure-interaction relationships that would enable the prediction of the formation of a particular polyphenol-dietary fiber complex and the effect on polyphenol bioaccessibility, based on particular structural characteristics, have not been elucidated.

Due to wide variety of different factors that can influence the formation of dietary fiber-polyphenol interactions, the only way to investigate the impact of dietary fiber on the gastrointestinal stability and bioaccessibility of polyphenols is to expose the dietary fiber-polyphenol mixtures to the simulation of gastrointestinal digestion *in vitro.* This can be conducted by several types of *in vitro* digestion methods that are commonly used for food; these can be divided into static and dynamic methods. These models aim to simulate the physiological conditions of the upper gastrointestinal tract, namely the oral, gastric and small intestinal phases. Static models use a constant ratio of food to enzymes and electrolytes, and a constant pH for each digestive phase and they have been widely used for food and pharmaceutical purposes (Kaukonen, A. M., et al.:. Drug solubilization behavior during in vitro digestion of suspension formulations of poorly water-soluble drugs in triglyceride lipids. Pharm. Res. 21, 254-260 (2004).; Maldonado-Valderrama, J. et al: In vitro gastric digestion of interfacial protein structures: visualisation by AFM. Soft Matter 6, 4908-4915 (2010). However, currently there are a great number of digestion methods currently being used in different laboratories that differ slightly in important parameters such as pH, duration, enzyme concentration and activity, and composition of simulated digestive fluids. Therefore, in order to harmonize the conditions of in vitro digestion simulation and enable comparison of the results obtained in different laboratories, INFOGEST 2.0 protocol has been developed and it has been used in this investigation. Brodkorb, A., Egger,. et al. INFOGEST static in vitro simulation of gastrointestinal food digestion. Nat Protoc 14, 991-1014 (2019). https://doi.org/10.1038/s41596-018-0119-1

Most of the available studies investigated bioavailability of curcumin using animal models or human studies and proved very low bioavailability (<1%) (Tsuda, T.: Curcumin as a functional food-derived factor: degradation products, metabolites, bioactivity, and future perspectives. Food & function, 2018, 9(2), 705-714. In vitro bioaccessibilty of curcumin has usualy been assessed in articels on developing specific formulations of curcumin with improved solubility and gastrointestinal stability (cyclodextrin-based inclusion complexes, nanoformulations, (micro)emulsions curcumin liposomes, and curcumin phospholipids' complexes) (Gayathri, K. et al.: Nano formulation approaches for curcumin delivery-a review. Journal of Drug Delivery Science and Technology, 2023, 104326.; Jamwal, R.: Bioavailable curcumin formulations: A review of pharmacokinetic studies in healthy volunteers. Journal of integrative medicine, 2018, 16(6), 367-374. According to our knowledge, the presented invention is the first attempt to achieve significant impact on curcumin bioaccessibility by simple modification of food matrix composition (i.e. adding specific fiber mixture to the formula).

The present invention reveals combination of dietary fibers that improves bioaccessibility of curcumin and may be used for enteral compositions.

Enteral composition or enteral nutritional composition or nutritional composition relates to the formulations or formulas from category of food for special medical purposes (FSMP) or commonly referred to as enteral nutrition or clinical nutrition.

The combination of dietary fibers that improves bioaccessibility of curcumin may be used for enteral composition for different purposes, for example for: GI disorders; persons with diabetes; persons who suffer from general or disease-related malnutrition or are in of risk of malnutrition; persons who suffer from sarcopenia and age related nutrition consequences.

## SUMMARY OF THE INVENTION

The present invention relates to an enteral nutritional composition comprising:

a) dietary fiber fraction wherein fibers are selected from resistant dextrin, oligofructose, inulin, acacia fiber and citrus fiber

b) curcumin

In one embodiment, the nutritional composition further comprises a protein fraction, a fat fraction, and a carbohydrate fraction.
The invention further relates to the use of the composition in the preparation of nutraceuticals comprising of dietary fiber mixture with beneficial effect on bioaccessibility of curcumin.

## BRIEF DESCRIPTION OF THE FIGURES

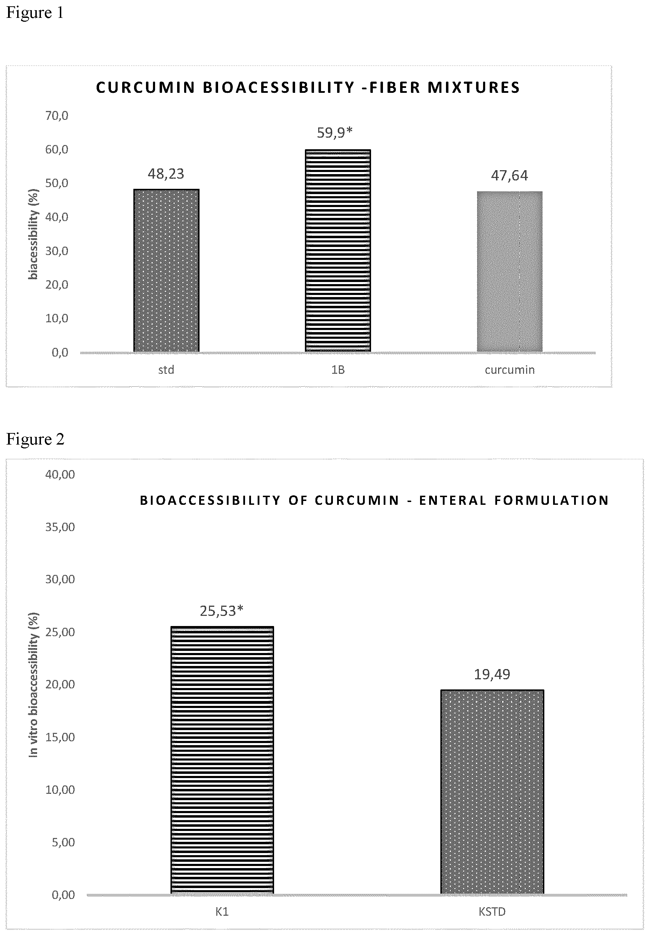

**Figure 1:** Bioaccessibility of curcumin after simulation of gastrointestinal digestion *in vitro,* where curcumin solution was added to dietary fiber mixture 1B and STD. Value marked with asterisk (*) are significantly different ($p < 0.05$) as assessed by one-way ANOVA and post hoc Tukey test.
The obtained results show improved bioaccesability of curcumin with 1B fiber mixture (59.90%) compared to curcumin with standard fiber mixture STD (48.23%) or curcumin without fibers (47.64%).

**Figure 2:** In vitro gastrointestinal bioaccessibility of curcumin from enteral formulations K1 and KSTD which contain fiber mixtures 1B and STD respectively. Value marked with asterisk (*) are significantly different ($p < 0.05$) as assessed by one-way ANOVA and post hoc Tukey test. Obtained data show that gastrointestinal bioaccessibility of curcumin is significantly higher in K1 (25.53%) compared to KSTD (19.49%).

## DETAILED DESCRIPTION OF THE INVENTION

Curcumin as used herein relates to polyphenol compound [1,7-bis(4-hydroxy-3-methoxyphenyl)-1,6-heptadiene-3,5-dione] found in the rhizome of turmeric and other Curcuma spp. Curcumin is the main curcuminoid in turmeric curcuminoids. Turmeric curcuminoides is mainly a mixture of curcumin, demethoxycurcumin and bis-demethoxycurcumin. Raw material of curcumin may have different percentage of curcumin depending on the origin.
Resistant dextrin as used herein relates to soluble fiber that is very resistant to digestion. It is partially hydrolysed starch by heating in the presence of food grade-acid.
Oligofructose (fructo-oligosaccharide, FOS) as used herein relates to a food ingredient consisting mainly of oligofructose. It is usually produced by partial enzymatic hydrolysis of inulin or by enzymatic reactions from sucrose. It consists of oligosaccharides composed of fructose linked together by β-(2,1) bonds, and part of fructose chains are terminated by a glucose unit. The degree of polymerization ranges mainly between 2 and 8. It has good water solubility and good fermentability properties, and prebiotic effect.
Inulin as used herein relates to fructose polymer consists of oligo - and polysaccharides composed of fructose units linked by β-(2,1) bonds. Usually, the fructose chain is terminated by glucose unit. The total number of fructose and glucose unit of inulin ranges mainly between 2 and 60, but possible up to 200 glucose unit. Inulin is found naturally in plants such as chicory, onions and artichokes. It has good water solubility and good fermentability properties, and prebiotic effect.
Acacia fiber (gum arabic) as used herein relates to complex polysaccharide obtained from an exudation of Acacia trees (Acacia Senegal or closely related species of *Acacia*). It is dried gummy exudation of high molecular polysaccharides. Gum arabic consists mainly of high molecular weight polysaccharides and their calcium, magnesium and potassium salts, which after hydrolyses yield arabinose, galactose, rhamnose and glucuronic acid. It has good water solubility properties, and can effect on viscosity and have gelling properties.
Citrus fiber as used herein relates to fiber derived from citrus fruit, and consists of an insoluble and soluble fiber fraction.
Cellulose fiber as used herein relates to a fiber from a natural sources reach in cellulose. Cellulose fibers are structured from cellulose, a starch-like carbohydrate.
"Innovative fiber composition" according to the present invention relates to fiber composition 1A, 1B, 1C and 1D as listed in Tables 1.1-1.4.
"Innovative composition" relates to fiber composition 1A, 1B, 1C and 1D containing curcumin (C) as listed in Table 4.1 (1A+C, 1B+C, 1C+C, 1D+C)

Fiber composition STD relates to composition as listed in Table 2 and is used as standard for comparison. Standard composition STD with addition of curcumin (C) used for comparasion is listed in Table 4.2.

"Fiber" as used herein relates to dietary fiber.

"Fiber mixture", and "fiber composition" are used as synonims in this application.

Fiber composition contains fibers with different physical properties, including both soluble and insoluble types of fiber.

Compositions of the present invention are prepared by the method know in the art such as mixing ingredients to get homogenous powder formulation.

Formulation, enteral nutritional formulation, nutritional formulation are used as synonims in this application.

Formulations of present invention belong to the category of food for special medical purposes.

Formulations relate to formulation containing fiber mixture, curcumin and other components as shown in Table 3. Composition of enteral formulation expressed on energy distribution of nutrients is listed in Table 5.

In one embodiment the invention relates to the enteral nutritional composition comprising:

a) at least two dietary fibers selected from resistant dextrin, oligofructose, inulin, acacia fiber and citrus fiber;
b) curcumin.

In a further embodiment the invention relates to the enteral nutritional composition comprising:

a) at least three dietary fibers selected from resistant dextrin, oligofructose, inulin, acacia fiber and citrus fiber;
b) curcumin.

In yet a further embodiment, the invention relates to the enteral nutritional composition comprising:

a) at least four dietary fibers selected from resistant dextrin, oligofructose, inulin, acacia fiber and citrus fiber;
b) curcumin.

In a yet further embodiment, the invention relates to enteral nutritional composition comprising:

a) all fibers selected from resistant dextrin, oligofructose, inulin, acacia fiber and citrus fiber;
b) curcumin.

In one embodiment the fiber fraction is in the amount of 0.5 to 40 g of dietary fibers per daily dosage of the enteral nutritional composition-wherein dietary fibers relate to the total content of the pure dietary fibers in the nutritional composition.

In one embodiment the nutritional composition comprises resistant dextrin in an amount of 20-90% by weight, oligofructose in the amount of 10-55% by weight, inulin in the amount of 0.1-30% by weight, acacia fiber in an amount of 1-25% by weight, and citrus fiber the in amount of 1-35% in the fiber fraction, with regard to content of the pure dietary fiber.

In preferred embodiment resistant dextrin is in the amount of 30 - 85% by weight, oligofructose is in the amount of 10-45% by weight, inulin is in the amount of 0.1-25% by weight, acacia fiber is in the amount of 1-20% by weight, and citrus fiber is in the amount of 1-25 % by weight in the fiber fraction, with regard to the content of the pure dietary fiber.

In one embodiment nutritional composition comprises resistant dextrin in an amount of 20-50% by weight, oligofructose in the amount of 10-35% by weight, inulin in the amount of 5-30% by weight, acacia fiber in the amount of 5-20% by weight, and citrus fiber in the amount of 10-35% by weight in the fiber fraction, with regard to the content of the pure dietary fiber.

In preferred embodiment resistant dextrin is in the amount of 30 - 40% by weight, oligofructose is in the amount of 15-30% by weight, inulin is in the amount of 5-25% by weight, acacia fiber is in the amount of 5-10% by weight, and citrus fiber is in the amount of 15-25% by weight in the fiber fraction, with regard to content of pure dietary fiber.

In one embodiment nutritional composition comprises resistant dextrin in the amount of 40-90% by weight, oligofructose in the amount of 10-55% by weight, inulin in the amount of 0,1-20% by weight, acacia fiber in amount of 1-20% by weight, and citrus fiber in the amount of 1-20% by weight in the fiber fraction, with regard to content of the pure dietary fiber.

In preferred embodiment resistant dextrin is in the amount of 45-85% by weight, oligofructose is in the amount of 15-45% by weight, inulin is in the amount of 0.1-10% by weight, acacia fiber is in the amount of 1-10% by weight, and citrus fiber is in the amount of 1-10 % by weight in the fiber fraction, with regard to content of the pure dietary fiber.

In one embodiment curcumin is in the amount of 45-5000 mg per daily dosage of the enteral composition. In another embodiment curcumin is in the amount of 80-3000 mg per daily dosage of the enteral composition.

In one embodiment amount of curcumin relates to a content of curcumin raw material. In another embodiment it relates to pure curcuminoids (calculated based on percentage of total curcuminoids in raw material). In another embodiment it relates to pure curcumin (calculated based on percentage of curcumin in raw material).

In one embodiment the nutritional composition comprises curcumin in the amount of 0.5 to 50% by weight in the innovative fiber mixture containing curcumin.

In further embodiment the nutritional composition comprises curcumin in the amount of 4 to 30% by weight in the innovative fiber mixture containing curcumin.

In further embodiment the nutritional composition comprises curcumin in the amount of 4 to 22% by weight in the innovative fiber mixture containing curcumin.

In one embodiment the nutritional composition comprises fiber fraction, curcumin, protein fraction, fat fraction, and carbohydrate fraction.

In one embodiment the protein fraction comprises proteins from milk or other animal sources or plant proteins or combinations of them; fat fraction comprises plant or animal fat sources of unsaturated and saturated fat acids; and carbohydrate fraction comprises complex and simple type of carbohydrates.

In one embodiment the protein fraction comprises high quality protein raw materials like proteins from milk (for example casein protein, whey protein) or other animal sources or plant proteins or combinations of thereof.

In one embodiment fat fractions comprise sources of lipids suitable for enteral nutritional composition. In further embodiment fat fraction comprises plant or animal fat sources of unsaturated and saturated fat acids. Some examples of fat sources: sunflower oil, rapeseed oil, medium-chain triglycerides, fish oil.

In one embodiment the carbohydrate fraction comprises carbohydrates are suitable for enteral nutritional composition.

In one embodiment carbohydrate fraction comprises complex and simple type of carbohydrates. Some examples of carbohydrates: maltodextrin, modified starch.

In one embodiment the energy distribution from fat fraction is 15-50%, from carbohydrates 20-60%, from proteins 10-60%, and from fiber 0.2-6% of total energy value of nutritional composition.

In one embodiment the composition relates to powder form wherein powder form need to be reconstituted with the addition of liquid according to the instructions for use before consumption.

In one embodiment the composition relates to the liquid (ready to drink) form.

In jet further embodiment the composition relates to semi-solid form, for example pudding; or solid form, for example nutritional bars.

Enteral composition according to present invention is intended for: persons with diabetes, GI disorders, persons suffering from general or disease-related malnutrition or are in of risk of malnutrition, persons suffering from sarcopenia and age-related nutrition consequences.

## EXAMPLES

### 1. In vitro gastrointestinal bioaccessibility of curcumin from Dietary fiber-curcumin model solutions

Table 1.1 Composition of fiber mixture 1A

| Raw material (type of fiber) | % in mixture , by weight |
| --- | --- |
| Resistant dextrin | 39.6 |
| Olifgofructose (FOS) | 24.2 |
| Inulin | 8.8 |
| Acacia fiber (gum arabic) | 7.0 |
| Citrus fiber | 20.4 |
| Total | **100.0** |

Table 1.2 Composition of fiber mixture 1B

| Raw material (type of fiber) | % in mixture, by weight |
| --- | --- |
| Resistant dextrin | 32.9 |
| Olifgofructose (FOS) | 15.4 |

(continued)

| Raw material (type of fiber) | % in mixture, by weight |
|---|---|
| Inulin | 17.5 |
| Acacia fiber (gum arabic) | 8.8 |
| Citrus fiber | 25.4 |
| Total | **100.0** |

**Table 1.3** Composition of fiber mixture 1C

| Raw material (type of fiber) | % in mixture, by weight |
|---|---|
| Resistant dextrin | 81.1 |
| Olifgofructose (FOS) | 14.9 |
| Inulin | 0.1 |
| Acacia fiber (gum arabic) | 1.0 |
| Citrus fiber | 2.9 |
| Total | **100.0** |

**Table 1.4** Composition of fiber mixture 1D

| Raw material (type of fiber) | % in mixture, by weight |
|---|---|
| Resistant dextrin | 55.4 |
| Olifgofructose (FOS) | 31.9 |
| Inulin | 4.3 |
| Acacia fiber (gum arabic) | 2.1 |
| Citrus fiber | 6.3 |
| Total | **100.0** |

**Table 2.** Composition of fiber mixture STD

| Raw material (type of fiber) | % in mixture , by weight |
|---|---|
| Resistant dextrin | 47.6 |
| Olifgofructose (FOS) | 14.3 |
| Inulin | 23.8 |
| Cellulose fiber | 14.3 |
| Total | **100.0** |

### 1.1. Preparation of dietary fiber-curcumin model solution

**Curcumin** is dissolved in simulated gastrointestinal fluid (SGF) to give concentration of 0.3 mg/mL.

### 1.2. Simulation of gastrointestinal digestion

Simulation of gastrointestinal digestion was conducted according to the procedure described in the publication: Brodkorb, A. et al.: INFOGEST static in vitro simulation of gastrointestinal food digestion. Nat Protoc 14, 991-1014 (2019). https://doi.org/10.1038/s41596-018-0119-1 Preparation of simulated gastric fluid and simulated intestinal fluid and investigation of enzymatic activities were conducted as described in original method. Short description of methodology is given below:
5 mL of curcumin solution (in simulated gastric fluid - SGF) and 167 $\mu$L of pepsin ((20 mg/mL in water) were added to 600 mg of dietary fiber mixture to a glass reaction vessel. Fibers were resuspended in the reaction solution and incubated at 37C for 2 hours in the dark with constant mixing on the magnetic stirrer (addition of gastric lipase was omitted due to low content of lipids in the reaction mixture).

After the simulation of gastric digestion, 2 mL of simulated intestinal fluid (SIF); 1.25 mL pancreatin (133 mg/mL in SIF); 0.75 mL of bile salts (200 mg/mL in SIF), were added to the mixture. If necessary, pH was adjusted to 7.00 with NaOH. Reaction mixture was placed for incubation for another 2h at 37°C in the dark with constant mixing on the magnetic stirrer.

After the simulation of intestinal digestion, reaction mixtures were centrifuged at 20 000 g for 4 min and supernatants were analyzed for the curcumin content (SMPL). Pure curcumin submitted to simulation of gastrointestinal digestion was used to assess gastrointestinal stability of curcumin (without fibers) (SMPL) Dietary fibre suspensions (without added curcumin) were used as a blank (BL). Curcumin dissolved in water and submitted to 2x2h incubation at 37 C (the same concentration and at under the same conditions as other samples subjected to simulation of gastrointestinal digestion) was used as positive control and those values indicated 100% of curcumin bioavailability (degradation of curcumin due to methodology and not due to exposure to gastrointestinal fluids) (CTRL).

### 1.3. Spectrophotometric determination of curcumin

Clear supernatants obtained after centrifugation were used for spectrophotometric determination og curcumin at 425 nm (Unsal et al., : Ultrasound-Assisted Ionic Liquid-Dispersive Liquid-Liquid of Curcumin in Food Samples Microextraction and Its Spectrophotometric Determination, Journal of AOAC INTERNATIONAL, Volume 102, Issue 1, 1 January 2019, Pages 217-221. If necessary, samples are diluted to give absorbance 0.2000-0.8000. Quantification of curcumin (when necessary) is conducted by the internal standard method (when sample is spiked with the known concentration of curcumin standard. Relative bioaccessibility of curcumin is calculated according to Equation 1:

$$\text{Bioaccessibility (\%)} = \frac{(Asmpl - Abl)}{Actrl} \times 100$$

$A_{smpl}$-absorbance of the curcumin-fiber digest or pure curcumin digest
$A_{bl}$-absorbance of dietary fiber digest (no addition of curcumin)
$A_{ctrl}$-absorbance of the curcumin solution that was not submitted to gastrointestinal digestion

### 2. In vitro gastrointestinal bioacessibility of curcumin from enteral formulations containing different fiber mixtures

Table 3. Composition of enteral formulation with different fiber mixture and curcumin

| % mass | K0 | K1 | K2 | K3 | KSTD |
|---|---|---|---|---|---|
| Protein raw materials | 20-30% | 20-30% | 20-30% | 20-30% | 20-30% |
| Carbohydrates raw materials | 27-45% | 27-45% | 27-45% | 27-45% | 27-45% |
| Fat raw materials | 18-32% | 18-32% | 18-32% | 18-32% | 18-32% |
| Minerals and vitamins raw materials | 1-6% | 1-6% | 1-6% | 1-6% | 1-6% |
| Aditives, flavours and other raw materials | 1-12% | 1-12% | 1-12% | 1-12% | 1-12% |
| Fiber mixture 1A | 6.7% | - | - | - | - |
| Fiber mixture 1B | - | 6.7% | - | - | - |
| Fiber mixture 1C | - | - | 6.9% | - | - |
| Fiber mixture 1D | - | - | - | 6.9% | - |
| Fiber mixture STD | - | - | - | - | 6.2% |
| Curcumin* (C) | 0.3% | 1.1% | 0.8% | 1.1% | 1.1% |
| *Amount of curcumin relates to pure curcumin calculated based on % by weight of curcumin in raw material. | | | | | |

**Table 4.1. Composition of innovative fiber mixture containing curcumin**

| INGREDIENTS | 1A + C | 1B + C | 1C + C | 1D +C |
|---|---|---|---|---|
| Resistant dextrin | 36.5 | 28.1 | 72.2 | 47.6 |
| Oligofructose (FOS) | 22.3 | 13.2 | 13.3 | 27.4 |
| Inulin | 8.1 | 15.0 | 0.1 | 3.7 |
| Acacia fiber (gum arabic) | 6.5 | 7.5 | 0.9 | 1.8 |
| Citrus fiber | 18.8 | 21.7 | 2.6 | 5.4 |
| Curcumin* (C) | 7.8 | 14.5 | 10.5 | 14.1 |
| TOTAL | 100 | 100 | 100 | 100 |
| *Amount of curcumin relates to pure curcumin calculated based on % by weight of curcumin in raw material. | | | | |

**Table 4.2.** Composition of STD fiber mixture containing curcumin

| INGREDIENTS | STD+ C |
|---|---|
| Resistant dextrin | 40.2 |
| Oligofructose (FOS) | 12.1 |
| Inulin | 20.1 |
| Cellulose fiber | 12.1 |
| Curcumin* (C) | 15.5 |
| TOTAL | 100 |
| *Amount of curcumin relates to pure curcumin calculated based on % by weight of curcumin in raw material. | |

**Table 5.** Composition of enteral formualtion expressed on energy distribution of nutrients

| % Energy | K0, K1, K2, K3 | KSTD |
|---|---|---|
| Proteins | 15-30% | 15-30% |
| Carbohydrates | 25-50% | 25-50% |
| Fat | 25-50% | 25-50% |
| Fibers | 1-5% | 1-5% |
| Samples of enteral formulations in powder form marked as:<br>K0, K1, K2, K3-enteral nutritional formulation containing fiber mixture 1A, 1B, 1C or 1D and curcumin (C)<br>KSTD- -enteral nutritional formulation containing fiber mixture STD and curcumin (C) | | |

**Determination of total curcumin**

100 mg of powder enteral formulation is extracted with 20 mL of acetonitrile on magnetic stirrer (power set to 730) in dark glass vials. After extraction, samples are filtrated and diluted 40 times prior to measurmenet (125 $\mu$L has been diluted to 5 ml).Absorbance is measured at 425 nm on Victor multiplate reader.

**Determination of bioaccessible curcumin**

Simulation of gastrointestinal digestion was conducted according to the procedure described in the publication of Brodkorb and co-workers (2019). Preparation of simulated gastric fluid and simulated intestinal fluid and investigation of enzymatic activities were conducted as described in original method. Short description of methodology is given below: 100 mg of sample was weight into dark glass reaction vessel and 4 mL of simulated gastric fluid (SGF) and 167 $\mu$L of pepsin ((20 mg/mL in water) were added. Reaction mixtures were incubated at 37C for 2 hours in the dark with constant mixing on the magnetic stirrer (addition of gastric lipase was omitted due to low content of lipids in the reaction mixture).

After the simulation of gastric digestion, 2 mL of simulated intestinal fluid (SIF); 1.25 mL pancreatin (133 mg/mL in SIF); 0.75 mL of bile salts (200 mg/mL in SIF), were added to the mixture. If necessary, pH was adjusted to 7.00 with NaOH. Reaction mixture was placed for incubation for another 2h at 37°C in the dark with constant mixing on the magnetic stirrer. After the simulation of intestinal digestion, reaction mixtures were centrifuged at 20 000 g for 4 min and supernatants were taken for further analysis. 5 mL of acetonitrile was added to 1 mL of each supernatant and mixture was incubated on magntic dsstirrer for 30 min (equivalent to total curcumin extraction). Obtained mixtures were used for determination of bioaccessible curcumin.

Enteral formulas with identical composition but without addtition of curcumin were used as negative controls. For positive control (simulating 100% curcumin bioaccessibility) 100 mg of sample was extracted with acetonitrile under the conditions of gastrointestinal extractions (4 hours, 37 C, constant stirring).

Bioacessibility was calculated according to Equation 2:

$$\text{Bioaccessibility (\%)} = \frac{A pos\ ctrl}{(Asmpl - Aneg\ ctrl)} \times 100$$

$A_{pos\ ctrl}$-absorbance of the positive control
$A_{smpl}$-absorbance of the sample
$A_{negctri}$-absorbance of the negative control

## Spectrophotometric determination of curcumin

Clear supernatants obtained after centrifugation were used for spectrophotometric determination og curcumin at 425 nm (Unsal et al., 2019). If necessary, samples are diluted to give absorbance 0.2000-0.8000. Quantification of curcumin has been conducted by using of calibration curve.

## Claims

1. An enteral nutritional composition comprising:

    a) at least two dietary fibers selected from resistant dextrin, oligofructose, inulin, acacia fiber and citrus fiber
    b) curcumin.

2. The composition according to claim 1, comprising at least three dietary fibers selected from resistant dextrin, oligofructose, inulin, acacia fiber and citrus fiber.

3. The composition according to claim 1, comprising at least four dietary fibers selected from resistant dextrin, oligofructose, inulin, acacia fiber and citrus fiber.

4. The composition according to any of preceding claims, wherein resistant dextrin is in the amount of 20-90% by weight, oligofructose is in the amount of 10-55% by weight, inulin is in the amount of 0.1-30% by weight, acacia fiber is in the amount of 1-25% by weight, and citrus fiber is in amount of 1-35% by weight in the fiber fraction.

5. The composition according to any of preceding claims, wherein resistant dextrin is in amount of 20-50% by weight, oligofructose is in the amount of 10-35% by weight, inulin is in the amount of 5-30% by weight, acacia fiber in amount of 5-20% by weight, and citrus fiber is in the amount of 10-35% by weight in the fiber fraction.

6. The composition according to any of preceding claims, wherein composition comprises curcumin in the amount of 0.5 to 50% by weight in the fiber mixture containing curcumin.

7. The composition according to any of preceding claims, wherein curcumin is in the amount of 45-5000 mg per daily dosage of enteral composition.

8. The composition according to any of preceding claims, wherein fiber fraction is in the amount of 0.5 to 40 g of dietary fibers per daily dosage of enteral nutritional composition.

9. The composition according to any of preceding claims, further comprising a protein fraction, a fat fraction, and a carbohydrate fraction.

10. The composition according to claim 9, wherein protein fraction comprises proteins from milk or other animal sources or plant proteins or combinations of them, fat fraction comprises plant or animal fat sources of unsaturated and saturated fat acids, carbohydrate fraction comprises complex and simple type of carbohydrates.

11. The composition according to any of claims 9-10, wherein energy distribution from fat fraction is 15-50%, from carbohydrates 20-60%, from proteins 10-60%, and from fiber 0.2-6% of total energy value of nutritional composition.

12. The composition according to any of preceding claims, wherein the composition is in powder form, wherein powder form need to be reconstituted with the addition of liquid according to the instructions for use before consumption.

13. The composition according to any of preceding claim wherein the composition is in liquid form or in form of semi-solid or solid form.

14. The composition according to any of preceding claims for use in providing nutrition to a persons suffering from diabetes, GI disorders, general or disease-related malnutrition or are in risk of malnutrition, or to persons suffering from sarcopenia and age related nutrition consequences.

Figure 1

Figure 2

| | Europäisches Patentamt European Patent Office Office européen des brevets | **EUROPEAN SEARCH REPORT** | **Application Number** EP 23 02 0518 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE GNPD [Online] MINTEL; 5 December 2014 (2014-12-05), anonymous: "Vanilla Flavoured Dietary Food for Medical Purposes", XP093150128, Database accession no. 2834949 * the whole document * | 1-11,13, 14 | INV. A23L33/105 A23L33/21 A23L33/00 |
| X | DATABASE GNPD [Online] MINTEL; 14 July 2021 (2021-07-14), anonymous: "Vanilla Shake", XP093150126, Database accession no. 8862609 * the whole document * | 1-12,14 | |
| X | DATABASE GNPD [Online] MINTEL; 21 March 2023 (2023-03-21), anonymous: "Banana Flavoured Meal Replacement Drink", XP093150067, Database accession no. 10670696 * the whole document * | 1-12,14 | |
| A | WO 2021/028743 A1 (JEYAKODI SHANKARANARAYANAN [IN]) 18 February 2021 (2021-02-18) * page 8, lines 26-29; claims 1,5 * | 1-14 | |
| A | WO 2020/039277 A1 (SALIMATH SHIDDALINGESH [IN]) 27 February 2020 (2020-02-27) * paragraphs [0088], [0089], [0123]; claim 1 * | 1-14 | |

TECHNICAL FIELDS SEARCHED (IPC)

A23L

-/--

The present search report has been drawn up for all claims

| Place of search | Date of completion of the search | Examiner |
|---|---|---|
| The Hague | 11 April 2024 | Galleiske, Anke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

**EP 23 02 0518**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/053641 A1 (ROCHAT FLORENCE [CH] ET AL) 10 March 2005 (2005-03-10) * paragraphs [0018], [0030]; claims 1,13 * ----- | 1-14 | |

**TECHNICAL FIELDS SEARCHED (IPC)**

The present search report has been drawn up for all claims

| Place of search | Date of completion of the search | Examiner |
|---|---|---|
| The Hague | 11 April 2024 | Galleiske, Anke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 02 0518

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2024

| Patent document cited in search report | Publication date | Patent family member(s) | | Publication date |
|---|---|---|---|---|
| WO 2021028743 A1 | 18-02-2021 | NONE | | |
| WO 2020039277 A1 | 27-02-2020 | NONE | | |
| US 2005053641 A1 | 10-03-2005 | AT | E485827 T1 | 15-11-2010 |
| | | AU | 8968001 A | 05-02-2002 |
| | | BR | 0112685 A | 24-06-2003 |
| | | BR | PI0112685 B1 | 07-04-2020 |
| | | CA | 2416990 A1 | 31-01-2002 |
| | | CN | 1466459 A | 07-01-2004 |
| | | DK | 1305036 T3 | 07-02-2011 |
| | | EP | 1175905 A1 | 30-01-2002 |
| | | EP | 1305036 A2 | 02-05-2003 |
| | | EP | 2204176 A2 | 07-07-2010 |
| | | EP | 2255815 A2 | 01-12-2010 |
| | | ES | 2355754 T3 | 30-03-2011 |
| | | ES | 2650122 T3 | 17-01-2018 |
| | | IL | 153989 A | 31-08-2005 |
| | | JP | 4955896 B2 | 20-06-2012 |
| | | JP | 2004504332 A | 12-02-2004 |
| | | KR | 20030041962 A | 27-05-2003 |
| | | MX | PA03000742 A | 25-09-2003 |
| | | PL | 366049 A1 | 24-01-2005 |
| | | PT | 1305036 E | 28-01-2011 |
| | | US | 2003166610 A1 | 04-09-2003 |
| | | US | 2005053641 A1 | 10-03-2005 |
| | | WO | 0207533 A2 | 31-01-2002 |
| | | ZA | 200301401 B | 21-05-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SLAVIN, J.** Fiber and prebiotics: Mechanisms and health benefits. *Nutrients*, 2013, vol. 5, 1417-1435
- **R. MEIER et al.** *Dietary Fiber: definition and classification*, 281-288
- **SOBOTKA et al.** Basic in Clinical Nutrition. Galen, 2011
- **PRIYADARSINI, K.I.** The chemistry of curcumin: From extraction to therapeutic agent. *Molecules*, 2014, vol. 19, 20091-20112
- **ESATBEYOGLU et al.** Curcumin-from molecule to biological function.. *Angew. Chem. Int. Ed.*, 2012, vol. 51, 5308-5332
- **BANEZ et al.** A systemic review on the antioxidant and anti-inflammatory effects of resveratrol, curcumin, and dietary nitric oxide supplementation on human cardiovascular health. *Nutr. Res.*, 2020, vol. 78, 11-26
- **G.R.B. IRVING et al.** Curcumin: The potential for efficacy in gastrointestinal diseases. *Best Practice & Research Clinical Gastroenterology*, 2011, vol. 25, 519-534
- **LANG et al.** Curcumin in Combination With Mesalamine Induces Remission in Patients With Mild-to-Moderate Ulcerative Colitis in a Randomized Controlled Trial. *Clin Gastroenterol Hepatol*, 2015, vol. 13 (8), 1444-1449
- **HANAI et al.** Curcumin maintenance therapy for ulcerative colitis: randomized, multicenter, double-blind, placebocontrolled trial. *Clin Gastroenterol Hepatol*, 2006, vol. 4 (12), 1502-6
- **ANAND et al.** Bioavailability of curcumin: Problems and Promises. *Mol. Pharm.*, 2007, vol. 4, 807-818
- **TEIXÉ-ROIG et al.** Enhancing the Gastrointestinal Stability of Curcumin by Using Sodium Alginate-Based Nanoemulsions Containing Natural Emulsifiers. *Int J Mol Sci.*, 28 December 2022, vol. 24 (1), 498
- **WANG et al.** Stability of Curcumin in Buffer Solutions and Characterization of Its Degradation Products. *J. Pharm. Biomed. Anal.*, 1997, vol. 15, 1867-1876
- **LIU et al.** Adsorption mechanism of polyphenols onto starch nanoparticles and enhanced antioxidant activity under adverse conditions. *Journal of Functional Foods*, 2016, vol. 26, 632-644
- **LIU, D. et al.** Adsorption behavior of polyphenols on cellulose is affected by processing history. *Food Hydrocolloids*, 2017, vol. 63, 496-507
- **LIU, J. et al.** Optimization and characterization of curcumin loaded in octenylsuccinate oat β-glucan micelles with an emphasis on degree of substitution and molecular weight.. *Journal of Agricultural and Food Chemistry*, 2014, vol. 62, 7532-7540
- **LIU, J. et al.** Aggregates of octenylsuccinate oat β-glucan as novel capsules to stabilize curcumin over food processing, storage and digestive fluids and to enhance its bioavailability. *Food and Function*, 2018, vol. 9, 491-501
- **KAUKONEN, A. M. et al.** Drug solubilization behavior during in vitro digestion of suspension formulations of poorly water-soluble drugs in triglyceride lipids. *Pharm. Res.*, 2004, vol. 21, 254-260
- **MALDONADO-VALDERRAMA, J. et al.** In vitro gastric digestion of interfacial protein structures: visualisation by AFM. *Soft Matter*, 2010, vol. 6, 4908-4915
- **BRODKORB, A., EGGER,. et al.** INFOGEST static in vitro simulation of gastrointestinal food digestion.. *Nat Protoc*, 2019, vol. 14, 991-1014, https://doi.org/10.1038/s41596-018-0119-1
- **TSUDA, T.** Curcumin as a functional food-derived factor: degradation products, metabolites, bioactivity, and future perspectives. *Food & function*, 2018, vol. 9 (2), 705-714
- **GAYATHRI, K. et al.** Nano formulation approaches for curcumin delivery-a review. *Journal of Drug Delivery Science and Technology*, 2023, 104326
- **JAMWAL, R.** Bioavailable curcumin formulations: A review of pharmacokinetic studies in healthy volunteers. *Journal of integrative medicine*, 2018, vol. 16 (6), 367-374
- **BRODKORB, A. et al.** INFOGEST static in vitro simulation of gastrointestinal food digestion. *Nat Protoc*, 2019, vol. 14, 991-1014, https://doi.org/10.1038/s41596-018-0119-1
- **UNSAL et al.** Ultrasound-Assisted Ionic Liquid-Dispersive Liquid-Liquid of Curcumin in Food Samples Microextraction and Its Spectrophotometric Determination. *Journal of AOAC INTERNATIONAL*, 01 January 2019, vol. 102 (1), 217-221